# EUROPEAN PATENT APPLICATION

(11) **EP 3 524 441 A1**
(43) Date of publication of application: **14.08.2019**
(21) Application number: 18156099.6
(22) Date of filing: 09.02.2018
(51) Int. Cl.: B60B 33/00, A47B 91/00

(54) **A MOVABLE CONSTRUCTION**

(71) Applicant: A. Rijksen Handel & Dienstverlening, 3852 NN Ermelo (NL)
(72) Inventor: RIJKSEN, Arie, 3852 NN Ermelo (NL)
(74) Representative: Plaggenborg, Menko Bernard

(57) **Abstract**

The invention relates to a construction (1), comprising a main body (6) and wheels (2, 3, 4) for supporting and relocating said construction, wherein the wheels comprise at least one wheel (4) that is coupled pivotably to said main body and other wheels (2, 3) that are optionally coupled pivotably to said main body, wherein said main body (6) is embodied as an imaginary circle or imaginary partial circle, said other wheels (2, 3) being positioned at a substantially same distance from a center of said circle.

The construction may for example be a piece of furniture or a shelter for housing animals, for example a coop.

## Description

The present invention relates to a movable construction according to the preamble of claim 1. The construction according to the present invention is especially suitable for use as garden furniture. According to a further aspect, the present invention also relates to a steering wheel for use with the construction according to the present invention.

The construction according to the present invention is especially applicable as furniture, but is not limited thereto. The description will mainly use the term furniture, whereas other applications are meant and envisaged as well, as will become clear when reading the present description.

It is known in the art to use furniture, both indoors and outdoors. Especially furniture that is used outdoors requires frequent relocation due to changing weather conditions.

It is a cumbersome exercise to relocate outdoor furniture due to its high weight and large size.

At present, there is no solution available for this drawback, except using many people to carry the furniture around. However, especially for elderly it remains difficult or even impossible to regularly relocate furniture.

The invention therefore aims at providing an improved construction, in particular improved furniture, of the kind mentioned in the preamble.

The invention further aims at providing a construction, for example but not limited to furniture, that allows elderly as well as singles of all ages to relocate same as they please, no matter how often they want it.

So as to obtain at least one of the above mentioned aims, the invention provides a construction as mentioned in claim 1. This construction has the advantage that it can be relocated, independent the physical situation of the person aiming to use the construction.

It has also shown that the construction according to the present invention provides joy to children (and even adults) who like to take a tour with the piece of construction, especially but not only when the construction is embodied as furniture. Such synergistic effect is a surprising and advantageous effect.

The present thus relates to a construction, comprising a main body and wheels for supporting and relocating said construction, wherein the wheels comprise at least one wheel that is coupled pivotably to said main body and other wheels that are optionally coupled pivotably to said main body, wherein said main body is embodied as an imaginary circle or imaginary partial circle, said other wheels being positioned at a substantially same distance from a center of said circle. This embodiment allows a user to rotate the complete construction when the rotation axis of the pivotable wheels is directed towards the center of said circle and to relocate the construction when the rotation axis is perpendicular to that direction. When said other legs are in a fixed position, these other wheels must be positioned parallel and thus must have the same rotation axis, so as to enable an easy relocation of the construction.

It is preferred that said construction comprises fixing means for fixing said pivotable wheel with respect to said main body in a non-pivotable manner. The pivotable wheel then can be placed in a position such that a relocation or rotation is not possible allowing for a more comfortable use.

As indicated above, it is especially preferable for the construction wherein said main body has a partially imaginary circular shape with a middle portion and legs extending therefrom, wherein said construction comprises a wheel at each of said legs and a wheel at a position near said middle portion, wherein said wheels at said respective legs are positioned parallelly with respect to each other and said wheel at said middle portion is comprised of said pivotable wheel.

More in particular, when said wheels at said respective legs have a rotation axis that extends through a center of said circular shape and wherein a pivot axis of said pivotable wheel is positioned at a normal line through said center of said circular shape, and wherein each of said wheels at said respective legs is positioned at a substantially same distance from said center, a very easy way of relocating and rotating said furniture is obtained.

The construction according to the invention is especially adapted for easy use, when said construction comprises seating elements facing towards the inside of said circular shape, allowing to use the construction as a piece of furniture.

An optimum protection against wind or peeking is obtained when said construction comprises a wall at at least part of said circular shape. The construction can be rotated to such position that others may not have a clear sight at people using the construction, for example as furniture. Also, especially by rotating the construction such that said wall is directed towards publicly accessible area, a user is shielded optimally from unwanted views.

When the construction according to the invention comprises an at least partially disk-shaped platform covering at least part of said imaginary circle or imaginary partial circle, one can easily stand on said platform which is especially favorable when the ground is grassy, muddy, wet or otherwise not easily accessible. place his own seating elements thereon, for example chairs and tables.

It is especially preferred if said construction according to the invention comprises a wall that is set up near a circumference of said platform.

Analogously, it is preferred that said platform is embodied for carrying any of a table and a chair as indicated above.

An easy way of rotating and relocating the construction according to the invention is obtained when the pivotable wheel has a control lever for pivoting same with respect to said main body.

More preferably, said control lever has an extendable handle.

Finally, it is preferred that the construction according to the invention comprises a roof, so as to shield people or animals using the construction from the weather, for example sun or rain.

Hereafter, the invention will be further described by means of a drawing. The drawing shows in:
Fig. 1 and 2 show a perspective view of the construction according to the invention,
Fig. 3 and 4 show a top view of the construction according to the invention,
Fig. 5 and 6 show a perspective view of part of the construction according to the invention, and
Fig. 7 and 8 show a detailed view of a pivotable wheel for use in the construction according to the invention.

The same and similar parts and features have been denoted by the same reference numerals in the figures. However, for ease of understanding the figures, not all parts that are required for a practical embodiment have been shown in the figures. The invention will hereafter be referred to as a piece of furniture, although the invention is not limited thereto. The construction may be used as a shelter for animals, for example as a coop.

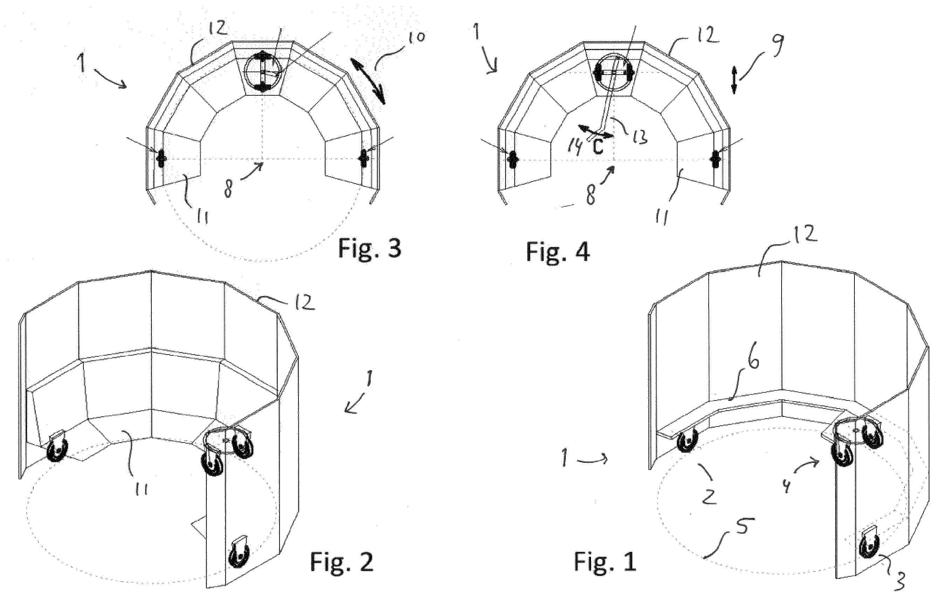

Fig. 1 shows a furniture 1 that is especially suitable for use in a garden, on a terrace and the like. Use is not limited to outdoor use, indoor use is possible as well. The furniture 1 of Fig. 1 is embodied as a windscreen in a partially circular shape, wherein wheels at positions 2, 3, 4 are provided for carrying and moving the furniture 1. Wheels at positions 2, 3 are positioned such that these substantially follow a track of an imaginary circle 5. Wheel at position 4, which optionally may be embodied as two or even more wheels, substantially follow said same track. By applying a set of three positions 2, 3, 4 for wheels a stable positioning of furniture 1 is obtained.

Hereafter, reference will be made to "wheels 2, 3, 4" where actually "wheels at positions 2, 3, 4" is meant. This merely is indicated this way so as to clarify the possibility that instead of a single wheel 2, a plurality of two, three or even more wheels is possible as well and is part of the invention. It is preferred that said multiplicity of wheels at position 4 are suspended and rotatable independently from each other.

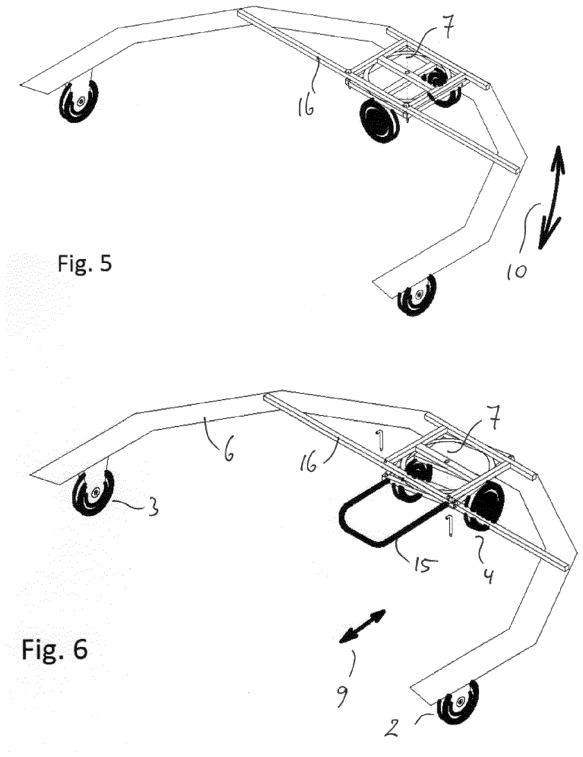

Wheel 4 is connected pivotably to furniture 1, more in particular to a main body 6. Wheels 2, 3 are connected to said main body 6 as well. Wheel 4 is pivotable around a vertical axis 7 (shown in Fig. 5, 6, 7, 8) and thus determines the way furniture 1 moves. When wheel 4 is in a position as shown in Fig. 1, 2, 3 the furniture can be rotated around rotation axis 8 in the direction of arrow 10 in Fig. 3 and 5. However, when wheel 4 is in a position as shown in Fig. 4, 6 and 7 the furniture can be relocated in the direction indicated by the arrow 9 in Fig. 4 and 6.

Fig. 2 indicates shows an embodiment of furniture 1 wherein seats 11 are provided at the furniture. The seats 11 are positioned such that users are facing inward, i.e. towards the center of rotation of the imaginary circle 5. The seats are shown in Fig. 3 and 4 as well. Seats 11 are preferably connected to the main body 6.

In Fig. 1, the main body 6 is connected to a wall 12. As a matter of fact, in accordance with the present invention, the wall 12 may embody the main body 6. Such embodiment of the invention is also embodied by the phrase "a furniture, comprising a main body" of claim 1. Analogously, the wall 12 and the seats 11 may be mutually connected embodying the main body 6. In such case, the wheels may be connected to the seats 11 or to the wall 12.

In Fig. 3, the pivotable wheel 4 has a control lever 13 for pivoting same in the direction of arrow 14 with respect to said main body 6.

As shown in Fig. 6, said control lever has an extendable handle 15. Handle 15 can be embodied as a removable handle, wherein free ends of said handle can be inserted in holes 23.

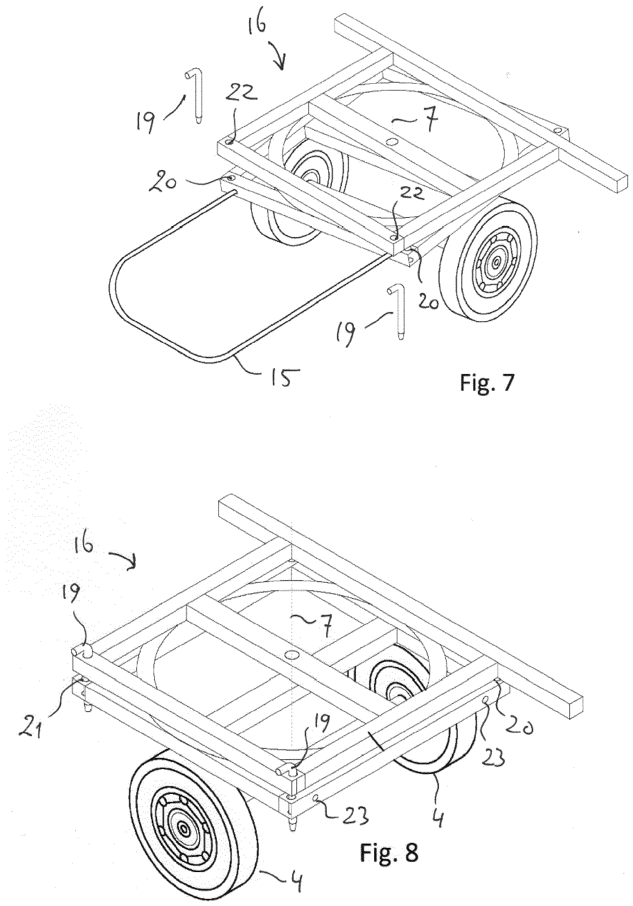

Fig. 5, 6, 7, 8 show a sub-frame 16 carrying the wheel 4, forming part of main body 6. The sub-frame 16 has a first frame part 17 rigidly connected to wheel 4. First frame part 17 is pivotably coupled to second frame part 18, said second frame part being rigidly connected to said sub-frame 16. As a result, wheel 4 can be pivoted with respect to said main body 6. So as to maintain said wheel 4 in one of said positions indicated in Fig. 7 and Fig. 8, coupling pins 19 are inserted in receiving holes 20 and 21, respectively of first frame part 17 and in holes 22 of second frame part 18.

The invention is not limited to the embodiments as mentioned above and as shown in the drawings. The invention is limited by the claims only.

The invention also relates to all other combinations of features described here independently of each other.

## Claims

1. A construction, comprising a main body and wheels for supporting and relocating said construction, wherein the wheels comprise at least one wheel that is coupled pivotably to said main body and other wheels that are optionally coupled pivotably to said main body, wherein said main body is embodied as an imaginary circle or imaginary partial circle, said other wheels being positioned at a substantially same distance from a center of said circle.

2. A construction according to claim 1, wherein said construction comprises fixing means for fixing said pivotable wheel with respect to said main body in a non-pivotable manner.

3. A construction according to claim 1 or 2, wherein said main body has a partially imaginary circular shape with a middle portion and legs extending therefrom, wherein said construction comprises a wheel at each of said legs and a wheel at a position near said middle portion, wherein said wheels at said respective legs are positioned parallelly with respect to each other and said wheel at said middle portion is comprised of said pivotable wheel.

4. A construction according to claim 3, wherein said wheels at said respective legs have a rotation axis that extends through a center of said circular shape and wherein a pivot axis of said pivotable wheel is positioned at a normal line through said center of said circular shape, wherein each of said wheels at said respective legs is positioned at a substantially same distance from said center.

5. A construction according to claim 1, wherein said construction comprises seating elements facing towards the inside of said circular shape.

6. A construction according to claim 1, wherein said construction comprises walls at at least part of said circular shape.

7. A construction according to claim 1, comprising an at least partially disk-shaped platform covering at least part of said imaginary circle or imaginary partial circle.

8. A construction according to claim 7, wherein a wall is set up near a circumference of said platform.

9. A construction according to claim 7, wherein said platform is embodied for carrying any of a table and a chair.

10. A construction according to claim 1, wherein the pivotable wheel has a control lever for pivoting same with respect to said main body.

11. A construction according to claim 10, wherein said control lever has an extendable handle.

12. A construction according to any of the preceding claims, comprising a roof.

13. A construction according to any of claims 1-12, embodied as a shelter for housing animals, for example a coop.
